# DEMANDE DE BREVET EUROPEEN

(11) **EP 1 217 224 A1**
(43) Date de publication de la demande: **26.06.2002**
(21) Numéro de dépôt: 01420232.9
(22) Date de dépôt: 05.12.2001
(51) Int. Cl.: F16B 7/14, A63C 11/22

(54) **Dispositif de serrage et bâton télescopique règlable en longueur utilisant un tel dispositif de serrage**

(30) Priorité: 20.12.2000 FR 0016639
(71) Demandeur: SKIS ROSSIGNOL S.A., 38500 Voiron (FR)
(72) Inventeur: Mandon, Florence, 38140 La Murette (FR); Gatel, Bernard, 38140 Renage (FR); Blin, Christophe, 7850 Enghien (BE)
(74) Mandataire: Palix, Stéphane

(57) **Abrégé**

Un dispositif de serrage pour deux tubes télescopiques (1, 2) comprend une bague fendue longitudinalement (7) définissant ainsi un espacement longitudinal (8) situé dans un plan coupant longitudinalement la bague (7), ladite bague (7) étant prolongée vers l'extérieur par deux ailes (9, 11) se faisant face de part et d'autre de l'espacement longitudinal (8), au moins une tige formant axe (A), disposée transversalement par rapport au plan et traversant les deux ailes (9, 11), et un bras (12) fixé et pivotant par rapport à la tige formant axe (A), pour permettre un serrage de la bague (7) par réduction de l'espacement longitudinal (8), les deux ailes (9,11) étant ramenées l'une vers l'autre.

Le bras (12) se divise en deux branches (13, 14) ayant chacune une extrémité libre au travers de laquelle passe la tige formant axe (A), les deux branches (13, 14) ainsi que les extrémités libres venant se placer de part et d'autre des deux ailes (9, 11) de la bague (7), afin d'enserrer lesdites deux ailes (9,11).

## Description

La présente invention concerne un dispositif de serrage pour tube télescopique.

La présente invention concerne également un bâton télescopique équipé d'un dispositif de serrage.

Des tubes télescopiques s'emboîtant les uns dans les autres sont utilisés pour faire varier la longueur de l'objet constitué avec ceux-ci. On peut envisager des tubes ronds ou des tubes présentant des sections à formes variées, telles que des sections ovales ou carrées. L'utilisation de tels tubes est large, et est par exemple envisagée pour des bâtons télescopiques de ski, des cannes télescopiques de randonnée, des tubes pour vélo (selle, guidon), pour patinette, etc.

Des bâtons télescopiques sont formés de plusieurs tubes à section de différentes dimensions qui sont étroitement emboîtés et ensuite fermement solidarisés. Deux systèmes de serrage principaux sont utilisés pour assurer le verrouillage d'un tube rond de plus gros diamètre sur le tube rond de plus petit diamètre qui lui est directement emboîté.

### Etat de la technique

On connaît deux systèmes de serrage permettant de comprimer le tube de plus gros diamètre sur le tube de plus petit diamètre : par rotation d'une bague et par basculement d'un bras. Plusieurs systèmes de serrage par basculement d'un bras ont été à ce jour proposé, soit à titre de collier de blocage et de couplage de tuyaux ou de montants, soit destinés à des bâtons télescopiques.

Les US- 4.381.585 et US- 3.828.403 décrivent un dispositif de verrouillage comprenant une bague fendue ou articulée. Au niveau de l'une des extrémités ouvertes de la bague, un premier bras est fixé pour rotation, et à son extrémité est également fixé un bras d'actionnement. L'une des extrémités du bras d'actionnement comprend une came venant coopérer avec une surface de came présente au niveau de l'autre des extrémités ouvertes de la bague, lorsque le deuxième bras est rabattu contre la bague.

Le US- 3.305.234 décrit également un dispositif de serrage comprenant une bague ouverte longitudinalement. Au niveau de l'une des extrémités ouvertes, une excroissance se déploie sensiblement tangentiellement par rapport à la bague. A l'extrémité de cette excroissance, un bras recourbé est attaché pour rotation, et il présente une came coopérant avec une surface de came présente vers l'extérieur de l'autre extrémité ouverte de la bague.

Le US- 3.084.964 décrit également un dispositif de serrage de type rotule comprenant une bague fendue longitudinalement traversée par une tige disposée tangentiellement au niveau de la fente. Un bras pivote à l'une des extrémités de la tige, et il comprend vers son axe de pivotement une came venant coopérer avec une surface plane positionnée à proximité de la fente.

Les EP- 0.641.578 et US- 5.441.307 décrivent un dispositif de serrage de type rotule destiné à un bâton télescopique. Le dispositif de serrage comprend une bague fendue longitudinalement. Une tige disposée tangentiellement traverse les deux parois de la fente. Un bras recourbé est fixé à la tige et pivote entre une position bague serrée et une position bague desserrée.

Le DE- 26.32.201 décrit un bâton dont la poignée peut être verrouillée grâce à un dispositif de serrage du type à levier monobloc pivotant présentant une came au niveau de son axe de pivotement. La came vient appuyer vers le haut de la poignée pour la comprimer contre le tube principal du bâton.

Le US- 2.304.343 décrit un dispositif de serrage de deux tubes télescopiques appartenant à un lutrin, comprenant une bague de serrage fendue longitudinalement, dont deux ailes peuvent être serrées par le pivotement d'un bras monobloc. Le bras présente à l'une de ses extrémités deux excroissances avec des moyens intérieurs formant came coopérant avec les deux ailes de la bague.

Le EP- 0.677.663 décrit un dispositif de serrage à fente longitudinale destiné à maintenir un tube. Un bras pivotant comprend à l'une de ses extrémités un axe ainsi que deux rondelles de blocage portant les moyens formant came. L'axe du bras vient s'encliqueter dans le dispositif, les deux rondelles avec les moyens formant came venant enserrer le dispositif à fente. A l'autre extrémité du bras sont prévus deux ergots venant coopérer avec deux creux qui sont ménagés sur une aile disposée de part et d'autre de la fente de l'élément.

Un premier inconvénient de ces dispositifs de serrage antérieurs est qu'ils nécessitent une pièce complémentaire sous la forme d'une boucle ou d'un deuxième bras articulé. Un deuxième inconvénient est que leur principe de serrage est inefficace en raison de l'action de la came sur un seul des côtés de l'espacement de la bague. Leur montage est complexe et demande un axe complémentaire de rotation perpendiculaire au premier axe passant au niveau de la fente. Du jeu apparaît dans la rotule au fur et à mesure que le dispositif de serrage est utilisé. Un autre inconvénient encore est que la force de serrage s'avère quelque fois insuffisante pour une utilisation intensive et pour des efforts longitudinaux s'appliquant directement et simultanément sur les deux tubes.

### Résumé de l'invention

La présente invention vise à obtenir un dispositif de serrage de deux tubes télescopiques à montage simplifié ne présentant pas les inconvénients des dispositifs de serrage de l'art antérieur. Un deuxième objet de la présente invention vise à obtenir un bâton télescopique équipé d'un tel dispositif de serrage.

Un premier problème posé consiste à réaliser un dispositif de serrage efficace qui permet de rapprocher simultanément les deux parties de la bague fendue longitudinalement.

Un deuxième problème posé est d'accroître les forces de maintien et de serrage et donc les surfaces de contact entre pièces mobiles.

Un dispositif de serrage pour deux tubes télescopiques comprend une bague fendue longitudinalement définissant ainsi un espacement longitudinal situé dans un plan coupant longitudinalement la bague, ladite bague étant prolongée vers l'extérieur par deux ailes se faisant face de part et d'autre de l'espacement longitudinal, au moins une tige formant axe, disposée transversalement par rapport au plan et traversant les deux ailes, et un bras fixé et pivotant par rapport à la tige formant axe, pour permettre un serrage de la bague par réduction de l'espacement longitudinal, les deux ailes étant ramenées l'une vers l'autre.

Conformément à un premier aspect de la présente invention, le bras se divise en deux branches ayant chacune une extrémité libre au travers de laquelle passe la tige formant axe, les deux branches ainsi que les extrémités libres venant se placer de part et d'autre des deux ailes de la bague, afin d'enserrer lesdites deux ailes.

Préférentiellement, au moins l'une des deux ailes présente des moyens formant came coopérant avec des moyens formant came présents sur au moins une branche du bras. Les deux ailes peuvent présenter chacune une ouverture. La tige formant axe peut alors passer par l'ouverture de chacune de ces deux ailes. Dans un mode de réalisation particulièrement avantageux, les moyens formant came comprennent au moins une surface inclinée disposée autour des ouvertures ménagées dans les deux ailes. De ce fait, ces surfaces coopèrent avec au moins une surface inclinée présente sur au moins une extrémité libre des branches du bras, et autour de l'axe de pivotement.

Afin d'éviter tout desserrage intempestif lorsque la bague est serrée, des moyens de verrouillage, par exemple de type à encliquetage peuvent être prévus pour bloquer le bras. Ces moyens de verrouillage comprennent de préférence une excroissance positionnée sur la tranche de la bague au niveau des deux ailes, qui coopère avec une saillie présente sur le bras. La saillie peut être positionnée au niveau de la surface intérieure d'une partie reliant les deux branches du bras.

De manière intéressante, les moyens de verrouillage sont en outre formés par au moins un ergot, présent sur au moins l'une des deux branches du bras, coopérant avec au moins un creux présent sur au moins l'une des deux ailes de la bague.

De manière avantageuse, le bras comprend en outre au moins une patte se déployant sensiblement perpendiculairement à au moins une des deux branches et au niveau d'au moins une extrémité opposée aux deux extrémités libres.

Conformément à un deuxième aspect de la présente invention, un bâton télescopique de ski ou de randonnée comprend au moins deux tubes cylindriques coaxiaux emboîtés l'un dans l'autre et est caractérisé par au moins un dispositif de serrage, tel que définit ci-dessus et enfilé autour du ou des tubes présentant le plus gros diamètre.

Les pattes présentes à l'extrémité du bras peuvent venir se placer et s'encliqueter de part et d'autre d'un tube présentant le plus petit diamètre.

### Description des dessins

L'invention sera bien comprise et ses avantages et diverses caractéristiques ressortiront mieux lors de la description qui suit d'un exemple non limitatif de réalisation, en se référant au dessin schématique annexé, dans lequel :
- la Figure 1 représente une vue en perspective éclaté du dessus d'une partie d'un bâton télescopique ;
- la Figure 2 représente une vue en perspective du dessus de la partie de bâton équipée de son dispositif de serrage en position desserrée ;
- la Figure 3 représente une vue en perspective du dessus de la partie de bâton équipée de son dispositif de serrage, en cours de serrage ;
- la Figure 4 représente une vue en perspective du dessus de la partie de bâton équipée de son dispositif de serrage en position totalement serrée ;
- la Figure 5 représente une vue latérale d'un dispositif de serrage, avec l'extrémité du bras visible en écorché ;
- la Figure 6 représente une vue du dessous d'un dispositif de serrage en position serrée ;
- la Figure 7 représente une vue de face en éclaté du dispositif de serrage ; et
- la Figure 8 représente une vue en perspective latérale de la partie de bâton équipée de son dispositif de serrage en position desserrée.

### Description détaillée de l'invention

Un bâton télescopique destiné à la randonnée ou au ski comprend au moins deux tubes de différents diamètres, au moins un dispositif de serrage pour deux tubes, une poignée de préhension et une extrémité pointue (non représentées). Un premier tube 1, de diamètre plus important, s'enfile sur un deuxième tube 2 présentant un diamètre sensiblement plus faible. La différence de diamètre entre le gros tube 1 et le petit tube 2 correspond à sensiblement deux fois l'épaisseur de la paroi de l'un des tubes.

A l'une des extrémités 4 et dans la paroi du tube présentant un diamètre plus important 1, est ménagée une fente longitudinale 3 s'étendant sur une longueur de 1 à 3 cm. Cette fente longitudinale 3 permet de serrer le tube de diamètre plus important 1 sur le tube de diamètre plus faible 2, par le rapprochement des deux parois opposées de la fente 3 l'une vers l'autre.

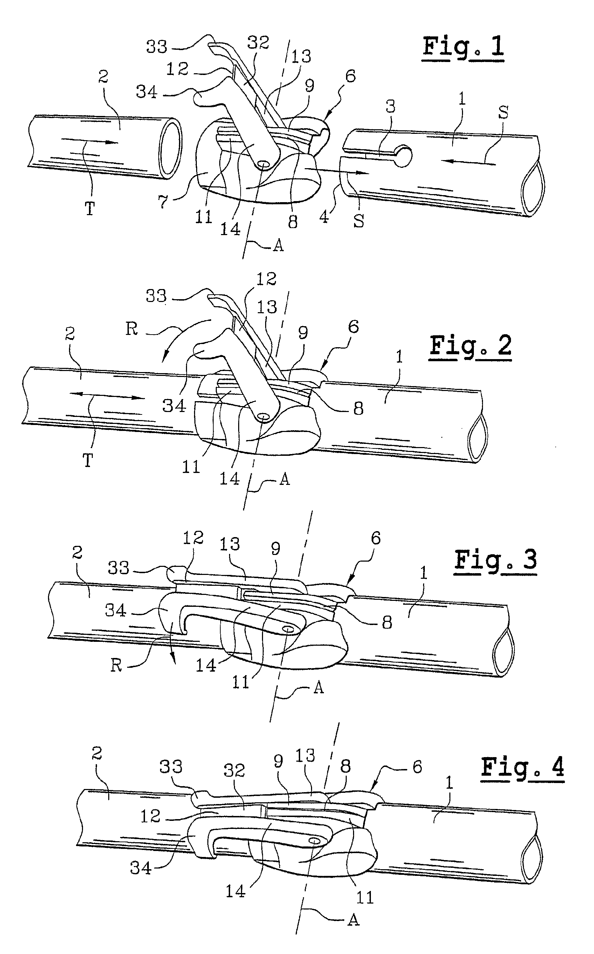

Un dispositif de serrage et de verrouillage 6 réalise une fixation ferme et sûr des deux tubes 1 et 2 l'un sur l'autre. Le dispositif de serrage 6 est enfilé (flèches S de la Figure 1) sur l'extrémité 4 du tube de plus gros diamètre 1, et il recouvre sensiblement la totalité de l'étendue de la fente longitudinale 3.

L'utilisateur peut ainsi faire coulisser (selon la flèche T des Figures 1 et 2) le tube de plus petit diamètre 2 à l'intérieur du tube de plus gros diamètre 1, soit pour régler la hauteur souhaitée pour le bâton télescopique, soit pour replier totalement le bâton télescopique. L'utilisateur va ensuite bloquer l'extrémité 4 du gros tube 1 sur le petit tube 2 grâce au dispositif de serrage 6, afin d'empêcher tout déplacement intempestif du petit tube 2 par rapport au gros tube 1.

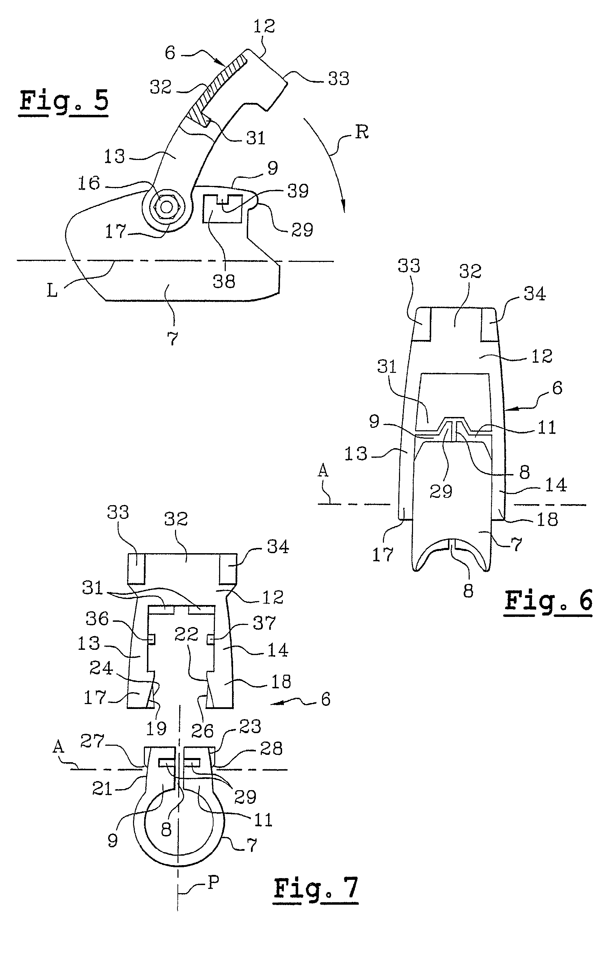

Le dispositif de serrage 6 comprend une bague de serrage 7 sous la forme d'un cylindre qui présente un diamètre sensiblement équivalent ou à peine supérieur au diamètre du gros tube 1. La bague de serrage 7 peut ainsi être insérée au niveau de l'extrémité 4 du gros tube 1. En un seul endroit et sur toute sa longueur, cette bague de serrage 7 est fendue longitudinalement, c'est-à-dire selon la direction longitudinale donnée par l'axe L (voir Figure 5), qui correspond à l'axe des tubes 1 et 2 une fois la bague 7 montée. La bague de serrage 7 reste en un seul tenant.

Du fait de cette fente longitudinale, la bague de serrage 7 présente un espacement 8, dont l'écartement peut être plus ou moins important selon que le serrage est réalisé ou non. L'espacement 8 est situé dans un plan P (voir Figure 7) coupant longitudinalement la bague 7 en son centre. Lorsque la bague 7 du dispositif de serrage 6 est enfilée autour du tube de plus gros diamètre 1, l'espacement 8 est placé en regard de la fente longitudinale 3 du tube 1. Ceci permet le serrage par réduction de l'écartement de l'espacement 8 entraînant la réduction de la fente 3.

Par l'existence de cet espacement 8, la bague 7 comprend deux parois ou ailes opposées et se faisant face 9 et 11. Les deux ailes 9 et 11 sont renforcées en épaisseur et se déploient toutes les deux diamétralement vers l'extérieur de la bague 7, et de part et d'autre du plan P. Ces deux ailes 9 et 11 se prolongent sur quasiment toute la longueur de l'écartement 8 et ainsi de la bague 7.

Un bras de serrage pivotant 12 possède deux branches séparées 13 et 14 qui viennent se placer respectivement de part et d'autre et à l'extérieur des ailes 9 et 11 à la fin du pivotement. Par ces surfaces de contact importantes entre la surface des deux branches libres 13 et 14 du bras 12 et la surface des deux ailes 9 et 11 de la bague 7, un maintien et un serrage particulièrement efficace sont obtenus. Les deux branches libres 13 et 14 enserrent complètement les deux ailes 9 et 11 rendant quasiment impossible l'écartement de ces même deux ailes 9 et 11, l'ouverture de l'espacement 8 et ainsi le desserrage de la bague 7. Le bâton télescopique avec ses tubes 1 et 2 s'avère particulièrement résistant aux chocs longitudinaux, sans avoir possibilité de se replier de manière intempestive.

Le bras 12 peut pivoter par rapport à un axe A passant successivement au travers de l'extrémité de la première branche 13, de la première aile 9, de l'espacement 8, de la deuxième aile 11, et enfin de l'extrémité de la deuxième branche 14 du bras 12. Cet axe A est tangentiel à la bague 7.

Afin de permettre la rotation par rapport à l'axe A, une tige ou encore une vis et son écrou 16 permettent de solidariser le bras 12 au reste du dispositif de serrage 6. A une extrémité libre et renforcée 17 de la première branche 13, ainsi qu'à une extrémité libre et renforcée 18 de la deuxième branche 14 du bras 12 est ménagée une perforation présentant un diamètre sensiblement équivalent au diamètre de la tige formant axe A, et permettant le passage de ladite tige. A travers les ailes 9 et 11 de la bague est ménagée une ouverture présentant un diamètre sensiblement égal au diamètre de la tige formant axe A, et destinée à faire passer ladite tige.

Le bras 12 peut ainsi pivoter par rapport à l'axe A selon une trajectoire R et passer d'une position sensiblement verticale sensiblement perpendiculaire aux tubes 1 et 2 du bâton télescopique (voir Figure 2) à une position horizontale sensiblement parallèle aux tubes 1 et 2 du bâton télescopique (voir Figure 4).

Afin de permettre le serrage, on a prévu une première surface formant came 19 positionnée au niveau du renforcement de l'extrémité libre 17 de la première branche 13 du bras 12. Cette première surface 19 est inclinée par rapport à la direction de la première branche 13 et est orientée vers l'intérieur de ladite branche 13. Cette première surface 19 vient coopérer avec une première surface inclinée 21 située à l'extérieur de la première aile 9 de la bague 7.

De la même manière, on a prévu une deuxième surface inclinée formant came 22 à l'extrémité libre et renforcée 18 de la deuxième branche 14 du bras 12, venant coopérer avec une deuxième surface inclinée 23 présente à l'extérieur de la deuxième aile 11 de la bague 7. Une troisième surface inclinée 24 a également été prévue au niveau du renforcement de l'extrémité libre 17 de la première branche 13 et une quatrième surface inclinée 26 a été prévue au niveau du renforcement de l'extrémité libre 18 de la deuxième branche 14 du bras 12. Les surfaces inclinées 19 et 24 de la première branche 13 font face aux surfaces inclinées 22, 26 de la deuxième branche 14.

La troisième surface 24 coopère également avec une troisième surface inclinée 27 prévue sur l'extérieur de la première aile 9, et la quatrième surface inclinée 26 coopère également avec une quatrième surface inclinée 28 présente à l'extérieur de la deuxième aile 11 de la bague 7. Lorsque toutes ces surfaces inclinées 19, 21, 22, 23, 24, 26, 27 et 28 entrent en contact respectivement les unes avec les autres, elles permettent lors de la rotation R du bras 12 de repousser l'une vers l'autre les ailes 9 et 11 de la bague 7 et ainsi le serrage de la bague 7. Lors de la rotation du bras 12 en sens inverse, toutes ces surfaces 19, 21, 22, 23, 24, 26, 27 et 28 ne se repoussent plus, ce qui permet l'accroissement de l'écartement 8 et ainsi le relâchement de la bague 7.

Afin de bloquer le bras 12 rabattu contre le tube 2, c'est-à-dire en position bague 7 serrée, on a prévu une excroissance 29 située sur la face transversale des ailes 9 et 11. L'excroissance 29 se divise en deux, en raison de la présence de l'écartement 8. L'excroissance 29 coopère avec une saillie 31 présente sur le bras 12. La saillie 31 est ménagée dans une partie centrale 32 du bras 12. La partie centrale 32 relie les branches 13 et 14 entre elles à l'opposé des deux extrémités libres 17 et 18. Lorsque le dispositif de serrage 6 est serré, l'excroissance 29 se retrouve en vis-à-vis de la saillie 31 et elle vient ensuite s'encliqueter après passage à force de la saillie 31.

Il est à noter que la partie centrale 32 du bras 12 se situe longitudinalement au-delà des deux ailes 9 et 11 de la bague de serrage 7.

Afin de bloquer le bras 12 rabattu contre le tube 2, c'est-à-dire en position bague 7 serrée, deux pattes complémentaires 33 et 34 sont également prévues sur les deux branches 13 et 14. Chacune des pattes complémentaires 33 et 34 est respectivement à l'opposé des deux extrémités libres 17 et 18 du bras 12 et au niveau de la partie centrale 32. Les deux pattes 33 et 34 sont perpendiculaires à l'axe principal des deux branches 13 et 14 et les deux pattes sont orientées en direction du tube lorsque la bague 7 est serrée. Les deux pattes 33 et 34 permettent principalement un encliquetage supplémentaire du bras 12 par leur insertion à force de part et d'autre du tube de plus petit diamètre 2.

Ces pattes 33 et 34 permettent aussi d'obtenir un aspect esthétique et/ou de faciliter la manipulation du bras 12 notamment avec des gants.

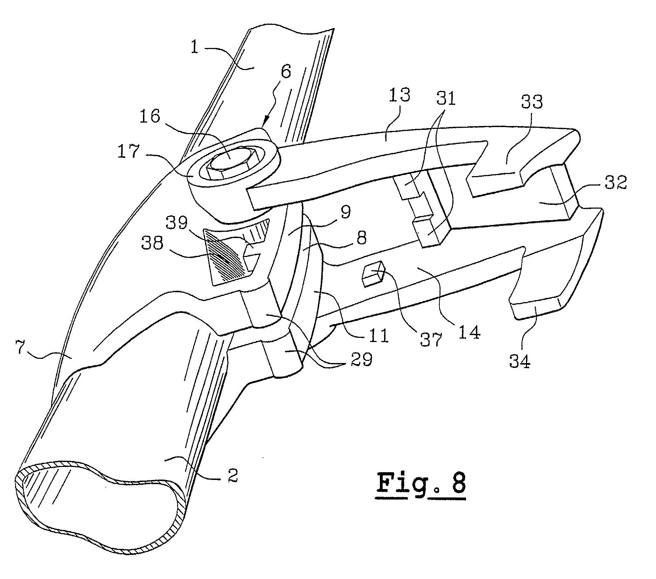

Afin de maintenir le bras 12 rabattu contre le tube 2, c'est-à-dire en position bague 7 serrée, deux ergots 36 et 37 sont rajoutés sur la face interne de chacune des deux branches 13 et 14 du bras 12. Chacune de ces deux ergots 36 et 37 coopère avec deux creux 38 (un seul est visible en Figures 5 et 8) présents sur chacune des deux ailes 9 et 11 de la bague 7. Lorsque le dispositif de serrage 6 est serré, les deux ergots 36 et 37 se retrouvent en vis-à-vis des deux creux 38 et ils viennent ensuite s'encliqueter après passage à force des deux ailes 9 et 11.

Deux surfaces supplémentaires 39 (une seule est visible en Figures 5 et 8) sont situées sur la partie extérieure de chacune des deux ailes 9 et 11. Les deux surfaces 39 s'avancent en pointe par rapport aux deux creux 38. Comme elles sont sur la trajectoire des ergots 36 et 37 lors de la rotation du bras 12, les ergots 36 et 37 glissent sur les surfaces 39 et permettent ainsi un serrage supplémentaire de la bague 7, juste avant le passage et l'encliquetage des deux ergots 36 et 37 dans les creux 38.

La présente invention n'est pas limitée aux modes de réalisation qui viennent d'être décrits ici. Les moyens formant came peuvent être modifiés.

## Revendications

1. Dispositif de serrage pour deux tubes télescopiques (1, 2) comprenant une bague fendue longitudinalement (7) définissant ainsi un espacement longitudinal (8) situé dans un plan (P) coupant longitudinalement la bague (7), ladite bague (7) étant prolongée vers l'extérieur par deux ailes (9, 11) se faisant face de part et d'autre de l'espacement longitudinal (8), au moins une tige formant axe (A), disposée transversalement par rapport au plan (P) et traversant les deux ailes (9, 11), et un bras (12) fixé et pivotant par rapport à la tige formant axe (A), pour permettre un serrage de la bague (7) par réduction de l'espacement longitudinal (8), les deux ailes (9, 11) étant ramenées l'une vers l'autre, **caractérisé en ce que**
le bras (12) se divise en deux branches (13, 14) ayant chacune une extrémité libre (17, 18) au travers de laquelle passe la tige formant axe (A), les deux branches (13, 14) ainsi que les extrémités libres (17, 18) venant se placer de part et d'autre des deux ailes (9, 11) de la bague (7), afin d'enserrer lesdites deux ailes (9, 11).

2. Dispositif de serrage selon la revendication 1, **caractérisé en ce qu'**au moins l'une des deux ailes (9, 11) présente des moyens formant came coopérant avec des moyens formant came présents sur au moins une branche (13, 14) du bras (12).

3. Dispositif de serrage selon la revendication 1 ou 2, **caractérisé en ce que** les deux ailes (9, 11) présentent chacune une ouverture, et **en ce que** la tige formant axe (A) passe par l'ouverture de chacune des deux ailes (9, 11).

4. Dispositif de serrage selon la revendication 2 ou 3, **caractérisé en ce que** les moyens formant came comprennent au moins une surface inclinée (21, 23, 27, 28) disposée autour des ouvertures ménagées dans les deux ailes (9, 11), la ou les surfaces inclinées (21, 23, 27, 28) coopérant avec au moins une surface inclinée (19, 22, 24, 26) présente sur au moins une extrémité libre (17, 18) des branches (13, 14) du bras (12) et autour de l'axe de pivotement (A).

5. Dispositif de serrage selon l'une des revendications précédentes, **caractérisé en ce qu'**il comprend des moyens de verrouillage destinés à bloquer le bras (12) lorsque la bague (7) est serrée.

6. Dispositif de serrage selon la revendication 5, **caractérisé en ce que** les moyens de verrouillage sont formés par une excroissance (29) positionnée sur la tranche de la bague (7) au niveau des deux ailes (9, 11), coopérant avec une saillie (31) positionnée au niveau de la surface intérieure d'une partie (32) reliant les deux branches (13, 14) du bras (12).

7. Dispositif de serrage selon la revendication 5 ou 6, **caractérisé en ce que** les moyens de verrouillage sont formés par au moins un ergot (36, 37) présent sur au moins l'une des deux branches (13, 14) du bras (12) coopérant avec au moins un creux (38) présent sur au moins l'une des deux ailes (9, 11) de la bague (7).

8. Dispositif de serrage selon l'une des revendications précédentes, **caractérisé en ce que** le bras (12) comprend en outre au moins une patte (33, 34) se déployant sensiblement perpendiculairement à au moins une des deux branches (13, 14) et au niveau d'au moins une extrémité opposée aux deux extrémités libres (17, 18).

9. Bâton télescopique de ski ou de randonnée comprenant au moins deux tubes coaxiaux (1, 2) emboîtés l'un dans l'autre, **caractérisé en ce qu'**il comprend au moins un dispositif de serrage (6) selon l'une des revendications précédentes, enfilé autour du ou des tubes présentant le plus gros diamètre (1).

10. Bâton télescopique selon la revendication 9, **caractérisé en ce que** les pattes (33, 34) présentes à l'extrémité du bras (12) viennent se placer et s'encliqueter de part et d'autre du tube présentant le plus petit diamètre (2).
